# EUROPEAN PATENT SPECIFICATION

(11) **EP 2 263 069 B1**
(45) Date of publication and mention of the grant of the patent: **05.06.2019**
(21) Application number: 09729368.2
(22) Date of filing: 07.04.2009
(51) Int. Cl.: G01N 1/44, B01L 3/00, G01N 33/483

(54) **DEVICE FOR STORING A BIOLOGICAL SAMPLE AND FOR PREPARING THE BIOLOGICAL SAMPLE**
VORRICHTUNG ZUR LAGERUNG EINER BIOLOGISCHEN PROBE UND ZUR PRÄPARATION DER BIOLOGISCHEN PROBE
DISPOSITIF POUR STOCKER UN ECHANTILLON BIOLOGIQUE ET POUR PREPARER L'ECHANTILLON BIOLOGIQUE

(30) Priority: 10.04.2008 SE 0800810
(43) Date of publication of application: 22.12.2010
(73) Proprietor: Denator Aktiebolag, 431 35 Mölndal (SE)
(72) Inventor: SKÖLD, Olof, S-411 15 Göteborg (SE); PALMERS, Göran, S-436 39 Askim (SE)
(74) Representative: AWA Sweden AB
(86) International application number: PCT/SE2009/050358
(87) International publication number: WO 2009/126099

(56) References cited:
- WO-A1-2006/088377
- WO-A1-2006/122968
- WO-A1-2007/024185
- US-A- 4 613 738
- US-A1- 2004 092 029

## Description

### TECHNICAL FIELD

The present invention relates to a device for storing and allowing transfer of heat for disrupting secondary structures of biological molecules in a biological sample.

### BACKGROUND OF INVENTION

Biological samples are collected and stored in great numbers in various research facilities. Devices that allow simple handling, storage and retrieval of biological samples are therefore at need.

The importance of rapid and accurate post sampling inactivation of biological samples to avoid degradation has recently been recognized, see eg. WO2007/024185, WO 2007/064294.

WO 2007/024185 identifies heating as a suitable means to inactivate a biological sample. Heating disrupts the secondary structures of enzymes, such as proteases, lipases and phosphorylases, thereby inhibiting enzymatic degradation of the biological sample.

### SUMMARY OF INVENTION

It is key to any analysis of a biological sample that the integrity of its constituents is conserved between the time that the sample is extracted from a living organism and the time that analysis is carried out. Sample degradation, however, is both hard to impede, and hard to detect. The result is that many analyses miss the presence of species that have degraded long before the analysis is carried out.
By disrupting the secondary structures of the biological molecules, so called denaturation, the same biological molecules loose their function for same biological molecules, certain biological processes are blocked and further degradation of the sample is avoided. Heat can be utilized to denaturate biological samples. How the heating of the sample is conducted is crucial since it may have severe unwanted effects if not controlled properly.

It is essential that heating of biological samples may be made rapidly, uniformly, and at and to a correct temperature: Heating at a too high or to a too high temperature and/or under too long time will degrade the primary structures and cause irreversible changes to the structures of the sample and make further analysis of the biological sample damage difficult or even impossible. Likewise, heating at a too low and/or under too short time will not be sufficient to bring about an effective inactivation of the biological sample. Uniform heating is essential since uneven heating of the biological sample can result in different sections of the biological sample receiving different heat treatments. This makes it difficult to determine if an effective heat treatment, with disruption of secondary, but not primary, structures, has been obtained throughout the sample. Thus the *whole* biological sample shall be heated to a significant temperature at which secondary structures are disrupted. At the same time it is crucial that the heating does not lead to a too high temperature since this would destroy the biological sample making it useless e.g. for the intended biological tests. The heating should be started within 2-4 minutes from taking the biological sample from a living body. It is however possible to have an intermediate period of freezing of the biological sample between the sampling and the heating. An object of the present invention is to support to accomplish this.

This raises a need for new devices which can be used to ensure adequate inactivation of biological samples, preferably heat inactivation. The present invention provides a device that fulfils multiple purposes.
1. The device should allow for the performance of rapid, uniform and adequate heating of biological samples of different forms and shapes in order to obtain appropriate heat inactivation of the biological sample by disrupting the secondary structures of biomolecules.
2. The device should further protect the biological sample from being contaminated during the heating process and during further handling and storage.
3. The device should further allow handling, storage and retrieval of the biological sample. This avoids the need remove and transport the biological sample between different devices.

According to a first aspect, a device for storing a biological sample according to claim 1 is disclosed. The device is also designed to allow transfer of heat for disrupting the secondary structures of the biological sample in order to accomplish was stated above in view of requirements on heating. The biological sample is a tissue biological sample. The device comprises a biological sample carrier having a portion. The portion is intended to receive the biological sample. In an embodiment, the portion may be indicated by a designated place on the surface of the biological sample carrier. However, the portion may extend down into, or through, the biological sample carrier. It may present an indication such that it is clear for a person where to place the biological sample. A shape of the portion may be round or a shape corresponding to the shape of the biological sample. The area of the portion is in one of the following intervals: 1 mm² to 5 dm², 3 mm² to 3 dm², 300 mm² to 100 cm². The device has a at least one sealing means for sealing the portion in order to protect it from an external viewpoint, including that the sealing means accomplishes an air tight sealing. The biological sample is intended to be between the portion and the sealing means.

The device also comprises a heat transfer segment that extends at least essentially through at least one of the portion and the sealing means. The function of a heat transfer segment is to conduct heat in a way such that the biological sample may be heated fast and/or uniformly. In case there are two heat transfer segments, heating of the biological sample may be performed through both heat transfer segments. In an embodiment, one of these two is located above the other one. That the heat transfer segment, in an embodiment, is located in the sealing means and allows heat to be transferred through the sealing means into the biological sample, e.g. for denaturation of the biological sample after having placed the biological sample on the portion for receiving the biological sample and sealed it using the sealing means. In an embodiment, the portion is the top of the heat transfer segment and the segment extends into the biological sample carrier. In an embodiment there are two heat transfer segments, one in the sealing means and in relation to the portion, as described above. In an alternative embodiment the heat transfer segment extends through the portion. In another embodiment, the heat transfer segment extends through the sealing means.

Non limiting examples of shapes of heat transfer segment includes shapes that at least partly encapsulate the biological sample such that there is a large contact area between the biological sample and the heat transfer segment, such as a shell.

In an embodiment, a surface of the heat transfer segment, that is intended to receive heat, presents a shape that at least essentially matches the shape of the external heat source.

The biological sample may be in solid form, semi solid form, and a liquid form.

A surface of the heat transfer segment, or the sealing means, is such that it adopts a shape in line with the biological sample. For instance in case of a biological sample in a solid form, the heat transfer segment adopts a shape such that there will be contact allowing rapid and/or uniform heat transfer of the biological sample when in the device. Thus the heat transfer segment is made of a material that is elastic or flexible. This allows it to adopt a shape in line with the biological sample.

This also offers an opportunity to reshape the biological sample, since the pressure difference (i.e. a lower pressure in the space between the sealing means and the portion than the surrounding pressure) causes the heat transfer segment to alter the shape of the biological sample.

Also, this offers an opportunity to measure the height profile of the biological sample with optical means. It is therefore important that the heat transfer segment does not to a too high degree reflect incoming radiation. A low refractive index, preferable below 1,5, lowers the reflection. In an embodiment, the refractive index is lower than 1,5. In an embodiment the refractive index is 1,35.

The heat transfer segment presents a ratio between a heat conductivity of and a thickness of the heat transfer segment that is larger than 500 W/m²K in order to enable heat transfer to the biological sample via the heat transfer segment leading to the disruption of the secondary structures of the biological sample by fast and uniform heating. In embodiments, the ratio is larger than 1000, 2000, 3000, 4000, or 5000. Thus this leads to the advantage of the device that the biological sample is heated to a sufficient temperature within 2-4 minutes from taking the biological sample.

In an embodiment, the thickness of the heat transfer segment is less than 3.0 mm. In an embodiment, the thickness of the heat transfer segment is less than 2.0 mm.

In an embodiment, the device is a card. A card is flat, where flat means having a relatively broad surface in relation to depth or thickness. This offers an advantage of being able to handle rather flat biological samples.

In an embodiment, a space defined as between the portion and the sealing means (for receiving the biological sample) if set under a pressure lower than a pressure surrounding the device, enables an adoption of a shape of the heat transfer segment so that a heat transfer contact surface between the heat transfer segment and an external heat source is increased. In an embodiment the pressure difference is higher than zero and lower than 0.1 MPa. Thus the pressure difference causes a better contact and therefore increases the efficiency of heat transfer, due to that the contact surface will be larger. Also, this leads to a shaping of the biological sample so that it becomes flatter and thus has a shape that is preferred for rapid and uniform heating of the biological sample. Also, effects of air pockets are decreased.

In an embodiment, the sealing means, if set under a vacuum, enables an adoption of its shape so that the contact between the sealing means and a biological sample is improved, i.e. the heat transfer properties are increased. The heat transfer properties may be increased also since the improvement of the contact also affects the shape of the biological sample, e.g. resulting in a flatter and thinner biological sample. This may lead to more rapid and more uniform heating of biological sample. In an embodiment, this implies an absolute pressure between 0.04 and 0.09 MPa.

In an embodiment, the device further comprises a duct for creating a pressure difference between an inside of the device and the outside. In an embodiment, a vacuum, or at least a pressure lower than the surrounding pressure, is created inside the device by evacuating the air inside via the duct. In an embodiment, the duct is sealed with a valve. In an embodiment, the valve is a thermo elastic member, which allows penetration of a syringe or similar. In an embodiment, the valve is made out of silicone. The pressure difference causes the heat transfer segment to adopt its shape in line with the biological sample which results in better contact between the biological sample and an external heat source, allowing for more efficient heat transfer. The operation is as follows. 1) Place biological sample on the portion (inside the device), 2) attach sealing means, 3) create the pressure difference by evacuating the portion via the duct by penetrating and sucking out air etc from the closed region surrounding the portion, 4) after having created the pressure difference, the syringe is removed and the valve closes of the portion and maintains the pressure difference. It is advantageous to avoid having excess oxygen in connection with the biological sample during heat treatment and storage since it limits the risk of oxidation of the biological sample.

In an embodiment, at least one of the sealing means and the biological sample carrier is entirely made of the same material as the heat transfer segment.

In an embodiment, the device is made of one or more materials that are essentially structurally intact for a period of shorter than 15 minutes in a temperature interval 50 to 100 degrees Centigrade.

In an embodiment, the device it is made of one or more materials that are essentially structurally intact in a temperature interval -197 to 20 degrees Centigrade. This offers the advantage of ensuring safe long term storage in a freezer.

In an embodiment, the portion is constituted by a recess in the biological sample carrier. In an embodiment, a recess is defined as when the portion is at a lower part of the biological sample carrier as compared to be at the surface of the biological sample carrier. In an embodiment, the recess is a ring placed on the surface of the carrier and where the ring surrounds the portion.

In an embodiment, the thickness of the sealing means is in the interval 0.01 to 0.3 mm. In embodiments where the sealing means has a heat transfer segment, the thickness of the heat transfer segment is lower than, the same as, or higher than the thickness of the sealing means. In embodiments, the thickness of the sealing means is 0.01 to 2.5, 0.01 to 2.0, 0.01 to 1.50, 0.01 to 1.0, 0.01 to 0.75, 0.01 to 0.5, 0.01 to 0.4, and 0.01 to 0.30 mm.

In an embodiment, the heat transfer segment is made of an inert material to limit the risk of contamination from the chosen material to the biological sample.

Non limiting examples of inert materials include plastics materials, PTFE (polytetrafluoroethylene), PP (polypropen), Platinum cured silicon, polycarbonate (PC), aluminium sheet, aluminum sheet, aluminium foil, fluoride plastic, and aluminum foil.

In an embodiment, the heat transfer segment is made of an elastic or flexible material to improve the heat transfer.

Non limiting examples of elastic or flexible materials include plastics materials, PTFE (polytetrafluoroethylene), PP (polypropen), Platinum cured silicon, polycarbonate (PC), aluminium sheet, aluminum sheet, aluminium foil, fluoride plastic, and aluminum foil.

In an embodiment the heat transfer segment is made of a material that is inert and elastic/flexible.

In an embodiment, the heat transfer segment has a surface, intended to be in contact with the biological sample, that is made of a material with a low coefficient of friction. This offers the advantage of ensuring that the whole biological sample can be prepared, heat treated and analyzed after heat treatment as well as stored in the device without the biological sample adhering to the surface of the heat transfer segment.

In an embodiment, the whole heat transfer segment is made of such material with low coefficient of friction.

In an embodiment the friction coefficient is below 0,6. In an embodiment the coefficient of friction is below 0,3. In an embodiment the coefficient of friction is below 0,1.

In an embodiment, the heat transfer segment is coated with at least one of heparin, silica, or an electrically conductive material.

In an embodiment, the biological sample carrier presents means for placing the biological sample carrier in a device rack.

In an embodiment, the biological sample carrier presents means allowing stacking, or piling, of devices, for instance on top of each other.

In an embodiment, the portion is a through hole extending through the biological sample carrier.

In an embodiment, the sealing means is constituted by two sealing members, of which a first sealing member seals one end of the through hole and a second sealing member seals the other end of the through hole. In this embodiment, the second sealing member may be fixed to the biological sample carrier when manufactured. Also, such a sealing means may present an area that is larger than the actual area of the trough hole. In an embodiment, the area may be the same as the area of the biological sample carrier. In an embodiment, the second sealing member has a function as a bottom lid or a top lid, against which the biological sample carrier is in contact.

In an embodiment, the sealing member is a foil.

In an embodiment, the sealing means is a screw lid to be screwed to the biological sample carrier such that the sealing means seals the portion.

In an embodiment, the sealing means is welded to the biological sample carrier such that the sealing means seals the portion.

In an embodiment, the device comprises a plurality of portions.

In an embodiment, the device presents an information tag. In non limiting embodiments, the information tag is one of a bar code, a text or image, RFID, and an optical tag.

In an embodiment, the device further comprises evacuating means for evacuating air from the portion sealed by the sealing means.

In an embodiment, the device further comprises a valve in connection to a space between the portion (7) and the sealing means (9, 13, 15). The intention of the space is to harbor the biological sample 3. This leads to the advantage of being able to create, or keep a pressure difference between the portion and its surroundings. The valve is important when it comes to creating a pressure difference, i.e. a lower pressure in the space between the sealing means and the portion than the surrounding pressure. This leads to an adoption of a shape of the heat transfer segment to support sufficient heat transfer, as pointed out above.

In an embodiment, there is a duct between the valve and the space.

In an embodiment, the device further comprises a filter between the valve and the space. This leads to an advantage namely to support that primarily air leaves the space harboring the biological sample.

In an embodiment, a surface of the heat transfer segment is made of an electrically conductive material. In an embodiment, the heat transfer segment is coated with the electrically conductive material. In an embodiment, the surface that faces the biological sample presents the electrically conductive material. Thus the electrically conductive material is able to be in contact with the biological sample.

A method for preparing a biological sample according to claim 15 is disclosed. It comprises
- placing the biological sample onto a portion in a device according to claim 1,
- sealing the sealing means,
- performing a heat inactivation step to prevent degradation.

In an example which does not form part of the invention, the method may further comprise the step of creating a pressure difference in the device. This leads to a contact between the heat transfer segment/sealing means the biological sample that allows a rapid and/or uniform heat transfer.

In a further example which does not form part of the invention, the heat inactivation step comprises heating the biological sample to a temperature within 60 to 100 degrees Centigrade, within less than 2 minutes. In an alternative, which does not form part of the invention, within two minutes means less than two minutes after the biological sample has been taken from a body. In a further example which does not form part of the invention, the biological sample is frozen before heat activation takes place.

### BRIEF DESCRIPTION OF DRAWINGS

In Figure 1, a first schematic embodiment of a device according to the present invention is disclosed.

In Figure 2, a second schematic embodiment of a device according to the present invention is disclosed, in which the portion is a through hole extending through the biological sample carrier is given.

In Figure 3, a third schematic illustration of an embodiment of a device according to the present invention is disclosed.

In Figures 4, 5, 6, 7, 8, 9, 10 and 11, schematic illustrations of components of the device shown in Figure 3 are given.

In several drawings, for instance thicknesses of features are exaggerated in order to make them easier to understand.

### BRIEF DESCRIPTION OF EMBODIMENTS

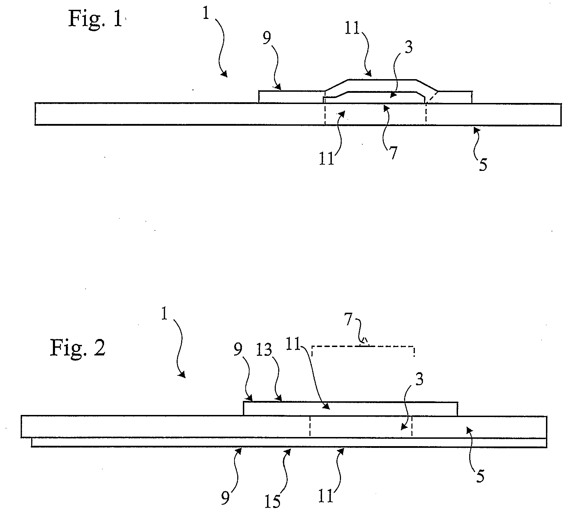

In Figure 1, a schematic illustration of a device 1 for storing and allowing transfer of heat for disrupting the secondary structures a biological sample 3 is disclosed. In the drawing a biological sample 3 is included for making it easier to understand. It comprises a biological sample carrier 5 having a portion 7. The portion 7 is intended to receive a biological sample 3. At least one sealing means 9 is provided for sealing the portion 7. The biological sample is intended to be between the portion (7) and the sealing means (9, 13, 15). Also, there is a heat transfer segment 11 that extends at least essentially through at least one of the portion 7 and the sealing means 9. In embodiments, the heat transfer segment 11 extends fully through the sealing means 9 and/or the portion 7. Also, the heat transfer segment 11 presents a ratio between a heat conductivity of and a thickness of the heat transfer segment 11 that is larger than 500 W/m²K in order to enable heat transfer to the biological sample 3 via the heat transfer segment 11 leading to that secondary structures of the biological sample are disrupted by fast and uniform heating. The thickness of the heat transfer segment 11 is 0.05 mm. The heat transfer segment 11 if set under a pressure difference of 0.02 MPa enables an adoption of its shape so that the contact between the sealing means 9 and a biological sample 3 is improved, i.e. the heat transfer properties are increased. The heat transfer properties may be increased also since the improvement of the contact also affects the shape of the biological sample, e.g. resulting in a flatter and thinner biological sample.

The heat transfer segment 11, if set under a vacuum, e.g. 0.065 MPa absolute pressure, enables an adoption of its shape because there is a lower pressure in the space between the sealing means 9 and the portion 7 than the surrounding pressure. At least one of the sealing means 9 and the biological sample carrier 5 is entirely made of the same material as the heat transfer segment 11.

The device 1 is made of one or more materials that are essentially structurally intact for a period of shorter than 15 minutes in a temperature interval 50 to 100 degrees Centigrade. Also, the device 1 is made of one or more materials that are essentially structurally intact in a temperature interval -197 to 20 degrees Centigrade.

The heat transfer segment 11 is made of at least one of an inert and/or flexible material, such as plastics materials, PTFE (polytetrafluoroethylene), PP (polypropen), Platinum cured silicon, polycarbonate (PC), aluminium sheet, aluminum sheet, aluminium foil, or aluminum foil.

In Figure 2, a schematic embodiment of a device 1 is given, in which the portion 7 is a through hole that extends through the biological sample carrier 5. In this embodiment, the sealing means 9 is constituted by two sealing members 13, 15, of which a first sealing member 13 seals one end of the through hole and a second sealing member 15 seals the other end of the through hole. One of the sealing members 15 is a plate sealing the through hole. The plate, or the bottom or lid, is fixed to the biological sample carrier 5 at manufacture. In an embodiment, the plate is larger than the area of the through hole. In an embodiment, the plate has the same area as the biological sample carrier 5.

In an embodiment, the sealing means 9 is a screw lid to be screwed to the biological sample carrier 5 such that the sealing means 9 seals the portion.

A sequence of examples describing the heat transfer properties of heat transfer segments 11 will now be given.

Based on a biological sample of 2 mm thickness on the portion 7, the time T is from the portion 7 coming in contact with the external heat source until the temperature of the top of the biological sample 3 reaches 80 C. The portion 7 and the biological sample 3 have a start temperature of 20 C. The heat source is 95 C.

| Thickness of the portion (mm) | Aluminum, Time (s) | PP, Time (s) |
|---|---|---|
| 0,05 | 25.5 | 31 |
| 0,1 | 25.5 | 34 |
| 0,2 | 25.5 | 40.5 |
| 0,5 | 25.5 | 65 |

In an example, the portion 7 has a thickness of 0,1 mm. Time T defined as above.

| Thickness of the biological sample (mm) | Aluminium, 0.1 mm thick, Time (s) | PP, 0.1 mm thick Time (s) |
|---|---|---|
| 0.5 | 1.7 | 3.4 |
| 1 | 6.5 | 10.1 |
| 2 | 25.6 | 33.3 |
| 3.5 | 78.5 | 91.5 |
| 5 | 162.5 | 181.5 |

In an example, a biological sample 3 is frozen and a 0.1 mm thickness is placed on top of the frozen portion 7 (-18 C). Time T defined as above.

| Thickness of the portion (mm) | Aluminium, 0.1 mm thick Time (s) | PP, 0.1 mm thick Time (s) |
|---|---|---|
| 0.05 | 0.2 | 0.52 |
| 0.1 | 0.2 | 1.1 |
| 0.2 | 0.2 | 2.05 |
| 0.5 | 0.2 | 5.75 |

In an example, 1 mm thick biological sample 3 is on the portion 7. The biological sample 3 has a temperature of 20 C at start, the center of the biological sample 3 (i.e. 0.5 mm in to the biological sample 3) is at 90 C at time T.

| | Al | PP | PC |
|---|---|---|---|
| Thickness (mm) | Time (s) | Time (s) | Time (s) |
| 0.05 | 9.3 | 12.7 | 12.9 |
| 0.25 | 9.5 | 23 | 22.8 |
| 0.5 | 9.6 | 39.6 | 39.5 |
| 1 | 10.6 | 79 | 79.4 |
| 2 | 11.5 | 166.5 | 172 |
| 3 | 11.5 | 286 | 280 |

In a second run is the biological sample 3 removed and the pure portion 7 is heated.

| | Al | PP |
|---|---|---|
| Thickness (mm) | Time (s) | Time (s) |
| 0.05 | <1 | 0.2 |
| 0.25 | <1 | 0.8 |
| 0.5 | <1 | 2.6 |
| 1 | <1 | 10.5 |
| 3 | 3.2 | Too long time |

Even though it takes less than one second to heat the portion 7 that is 0.25 mm thick, it has a large impact on the time T if the portion material has low heat conductivity.

Thus it shown, that the thickness of the portion 7 has a large impact on the time T, if the material in the portion 7 has low heat conductivity.

In the Table below, k-values for a specific thickness of aluminium (Al) and polypropen (PP) are given.

| PP | |
|---|---|
| K-Value (W/m²K) | Thickness (m) |
| 5 400 | 0,000050 |
| 2 700 | 0,000100 |
| 1 350 | 0,000200 |
| 1 080 | 0,000250 |
| 540 | 0,000500 |
| 270 | 0,001000 |
| 90 | 0,003000 |

| Al | |
|---|---|
| K-Value (W/m²K) | Thickness (m) |
| 3 800 000 | 0,000050 |
| 1 900 000 | 0,000100 |
| 950 000 | 0,000200 |
| 380 000 | 0,000500 |
| 190 000 | 0,001000 |
| 63 333 | 0,003000 |
| 190 | 1,000000 |

Now turning to the operation of preparing a biological sample 3, a first step is to place the biological sample 3 onto the portion 7. Then the sealing means 9, 13 is operated such that the portion 7 is sealed. After this a heat denaturation step to prevent degradation is performed. In the heat denaturation step, the biological sample 3 is heated up to a temperature within 60 to 100 degrees Centigrade, within less than 2 minutes. As described above, the heat is transferred through at least one heat transfer segment 11. A method for managing a biological sample 3 further comprises storing the device 1.

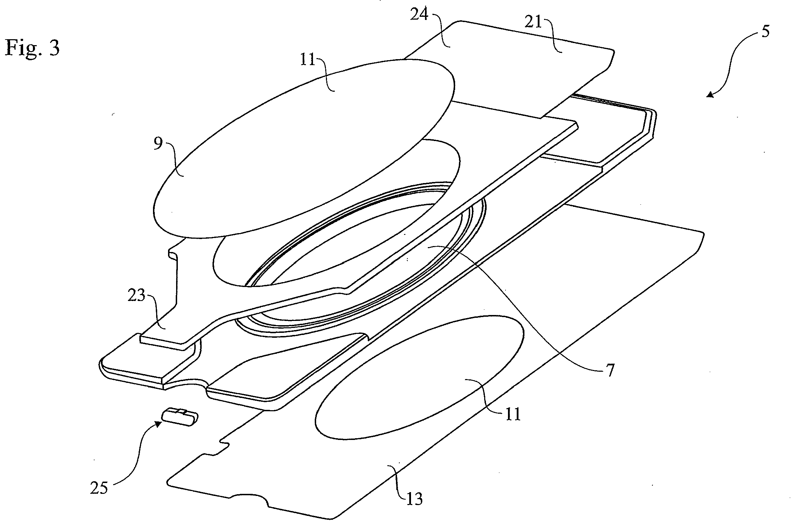

In figure 3, a schematic embodiment of a device according to the present invention is given. The device comprises: a biological sample carrier 5 having a portion 7. The portion 7 is intended to receive a biological sample 3. The device further comprises at least one sealing means 9, 13, for sealing the portion 7, a heat transfer segment 11 that extends at least essentially through at least one of the portion 7 and the sealing means 9, 13. The heat transfer segment 11 presents a ratio between a heat conductivity of and a thickness of the heat transfer segment 11 that is larger than 500 W/m²K in order to enable heat transfer to the biological sample 3 via the heat transfer segment 11. The device as shown in Figure 3 further comprises a text foil/information tag 21. In Figure 3 there is also a lid 23 having the sealing means 9 and the heat transfer segment 11. The lid 23 is fixed to the biological sample carrier 5 via means 24, which in an embodiment functions like a hinge. In an embodiment, the means 24 and the text foil/information tag 21 is the same.

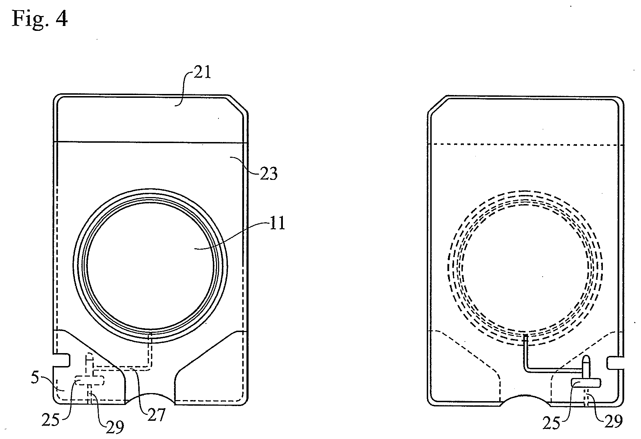

In Figure 4, an embodiment of a device as given in Figure 3 is given. In Figure 4, a device 1 further comprising comprises a duct 27 for evacuating air from the portion 7 sealed by the sealing means 9 is disclosed. The duct 27 has two ends; one in the portion 7 (or more specifically the space) and the other one at one of the surfaces of the device 29. Along the duct 27, a valve 25 is located in order to seal the portion 7. The valve 25 is penetratable by e.g. a syringe. The valve 25 is a one way valve, only allowing gas to leave the volume surrounding the biological sample 3.

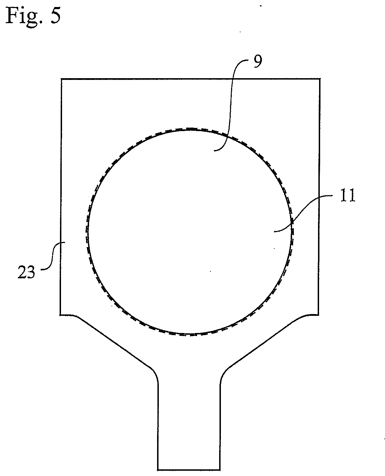

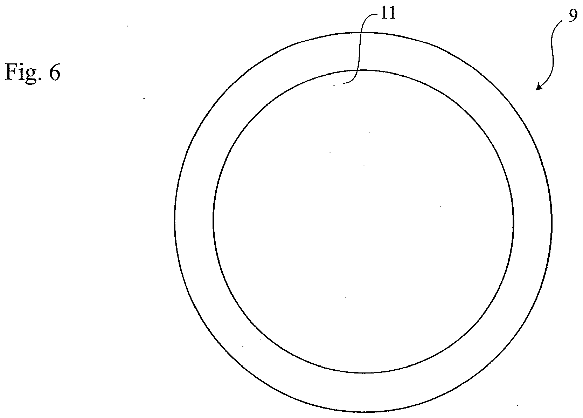

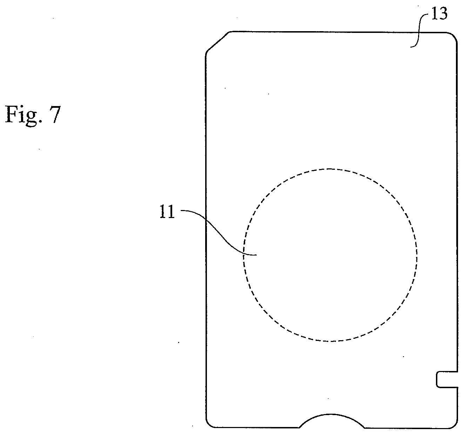

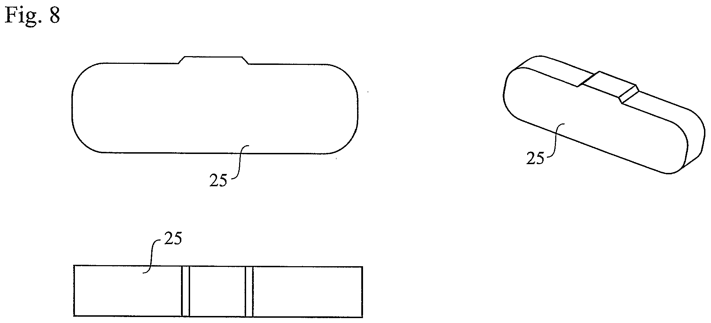

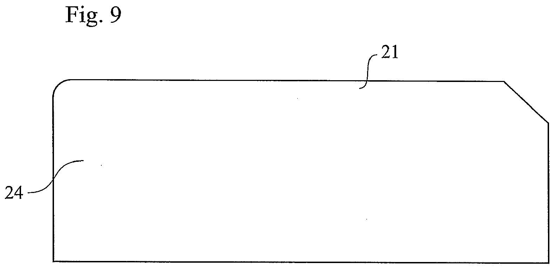

In Figure 5, an embodiment of the sealing means 9 is given. In an embodiment, there is a part with a fastening means for fastening the sealing means 9 to the lid 23. An inner portion of the sealing means 9 presents a heat transfer segment 11. In Figure 6, an embodiment of the sealing means 9 is given. In Figure 7, an embodiment of a bottom sealing means 13 is given. An inner portion is free from fastening means for receiving the biological sample 3. In Figure 8, an embodiment of the valve 25 is given. In Figure 9, an embodiment of the text foil/information tag 21 or the hinge 24 is given. Examples of fastening means include glue or an adhesive.

The function is as follows. First the lid 21 is opened and the biological sample 3 is placed on the sealing means 9/heat transfer segment 11. Then the lid 21 is closed. The closing between the lid 21 and the closing part of the carrier 5 is airtight. Then, an evacuator means, e.g. a syringe, is inserted into the opening 29 and through the valve 25 for creating a pressure difference in order to increase the contact (to enhance the heat transfer ability) between the biological sample 3 and the sealing means 9. In an embodiment, a vacuum is created. After creating the pressure difference the evacuation means is removed from the opening 29. Still the pressure difference is maintained by the valve 25. Then the biological sample is exposed to a heat transfer via at least one of the heat transfer segments 11. Thus, in an embodiment, the biological sample 3 is inactivated under a pressure difference.

In an embodiment, the sealing means 9, 13, 15 is flat and, when used to cover a biological sample 3, adopts a shape that covers and possibly also changes the original shape of the sample such that the sample will present a larger contact surface with intention to facilitate fast and uniform heat transfer.

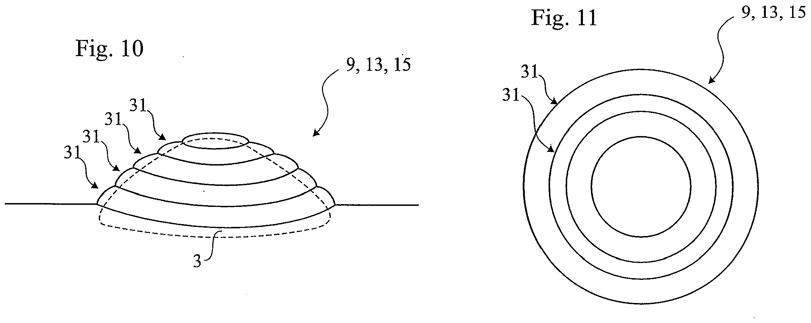

In an embodiment, shown in Figure 10 and 11 the sealing means 9, 13, 15 is prefabricated to present deviations 31 from being flat. One way of accomplishing these deviations 31 is to stretch the sealing means 9, 13, 15, such that it presents a desire deviational design, before fixing it to the lid 21. These deviations may be shaped as rings or rectangles, or any other shape. In an embodiment, the heat transfer segment 11 is a part of the sealing means 9, 13, 15. This will help the sealing means 9, 13, 15 or the heat transfer segment 11 to adopt a shape and possibly change the shape of the biological sample 3 such that rapid and uniform heat transfer is made possible as well as measurement of the sample height profile. In an embodiment, the reshaping of the biological sample is done in a non destructive way in view of the biological sample 3.

In the embodiment having two sealing means at least one of the sealing means 9 have this shape. In another embodiment, both sealing means have this shape.

## Claims

1. Device for storing a solid biological sample (3) and allowing transfer of heat for disrupting the secondary structures of the solid biological sample (3), the device comprising:
- a biological sample carrier (5) having a portion (7) for receiving a solid biological sample (3),
- at least one sealing means (9, 13, 15) for sealing the portion (7), wherein the solid biological sample is intended to be between the portion (7) and the sealing means (9, 13, 15) and where the sealing means (9, 13, 15) adopts a shape in line with the solid biological sample;
- a heat transfer segment (11) that
--extends at least essentially through at least one of the portion (7) and the sealing means (9, 13, 15),
--presents a ratio between a heat conductivity of and a thickness of the heat transfer segment (11) that is larger than 500 W/m K in order to enable heat transfer to the biological sample (3) via the heat transfer segment (11) leading to that secondary structures of the biological sample are disrupted by fast and uniform heating.

2. Device according to claim 1, wherein the thickness of the heat transfer segment (11) is less than 3.0 mm.

3. Device according to claim 1, wherein a space defined as between portion (7) and the sealing means (9, 13, 15) if set under a pressure lower than a pressure surrounding the device, enabling an adoption of a shape of the heat transfer segment (11),

4. Device according to claim 1, wherein at least one of the sealing means (9, 13, 15) and the biological sample carrier (5) is entirely made of the same material as the heat transfer segment (11).

5. Device according to claim 1, wherein the thickness of the sealing means (9, 13, 15) is in the interval 0.01 to 0.3 mm.

6. Device according to claim 1, wherein the heat transfer segment (11) is coated with at least one of heparin, silica, or an electrically conductive material.

7. Device according to claim 1, wherein the biological sample carrier (5) presents means for placing in a device rack.

8. Device according to claim 1, the biological sample carrier (5) presents means allowing stacking.

9. Device according to claim 1, wherein the portion (7) is a through hole extending through the biological sample carrier (5).

10. Device according to claim 9, wherein the sealing means (9, 13, 15) is constituted by two sealing members (13, 15), of which a first sealing member (13) seals one end of the through hole and a second sealing member (15) seals the other end of the through hole.

11. Device according to claim 1, wherein the device (1) presents an information tag (21).

12. Device according to claim 1, further comprising a valve (25) in connection to a space between the portion (7) and the sealing means (9, 13, 15).

13. Device according to claim 12, further comprising a filter (19) between the valve and the space.

14. Device according to claim 1, wherein a surface of the heat transfer segment (11) is made of an electrically conductive material.

15. Method for preparing a biological sample, comprising;
- placing the biological sample (3) onto the portion (7) in the device according to claim 1,
- sealing the sealing means (9, 13),
- performing a heat inactivation step to prevent degradation.

## Patentansprüche

1. Vorrichtung zur Lagerung einer festen biologischen Probe (3) und Ermöglichung von Wärmeübertragung zur Unterbrechung der sekundären Strukturen der festen biologischen Probe (3), wobei die Vorrichtung Folgendes umfasst:
- einen biologischen Probenträger (5) mit einem Abschnitt (7) zur Aufnahme einer festen biologischen Probe (3),
- mindestens ein Dichtmittel (9, 13, 15) zum Abdichten des Abschnitts (7), wobei die feste biologische Probe zwischen dem Abschnitt (7) und dem Dichtmittel (9, 13, 15) sein soll, und wobei das Dichtmittel (9, 13, 15) eine Form in Übereinstimmung mit der festen biologischen Probe annimmt;
- ein Wärmeübertragungssegment (11), das
-- sich mindestens im Wesentlichen durch mindestens eins von Abschnitt (7) und Dichtmittel (9, 13, 15) erstreckt,
-- ein Verhältnis zwischen einer Wärmeleitfähigkeit und einer Dicke des Wärmeübertragungssegments (11) aufweist, das größer ist als 500 W/m K, um Wärmeübertragung an die biologische Probe (3) über das Wärmeübertragungssegment (11) zu ermöglichen, die dazu führt, dass sekundäre Strukturen der biologischen Probe durch schnelles und gleichmäßiges Erwärmen unterbrochen werden.

2. Vorrichtung nach Anspruch 1, wobei die Dicke des Wärmeübertragungssegments (11) kleiner als 3,0 mm ist.

3. Vorrichtung nach Anspruch 1, wobei ein Raum, der zwischen Abschnitt (7) und Dichtmittel (9, 13, 15), festgelegt ist, die Annahme einer Form des Wärmeübertragungssegments (11) ermöglicht, wenn er unter einen Druck gesetzt wird, der niedriger ist als ein die Vorrichtung umgebender Druck.

4. Vorrichtung nach Anspruch 1, wobei mindestens eins von Dichtmittel (9, 13, 15) und biologischem Probenträger (5) vollständig aus demselben Material hergestellt ist wie das Wärmeübertragungssegment (11).

5. Vorrichtung nach Anspruch 1, wobei die Dicke des Dichtmittels (9, 13, 15) in einem Bereich von 0,01 bis 0,3 mm liegt.

6. Vorrichtung nach Anspruch 1, wobei das Wärmeübertragungssegment (11) mit mindestens einem von Heparin, Silica oder einem elektrisch leitfähigen Material beschichtet ist.

7. Vorrichtung nach Anspruch 1, wobei der biologische Probenträger (5) Mittel zum Anordnen in einem Vorrichtungsrack aufweist.

8. Vorrichtung nach Anspruch 1, wobei der biologische Probenträger (5) Mittel aufweist, die Stapeln ermöglichen.

9. Vorrichtung nach Anspruch 1, wobei der Abschnitt (7) ein Durchgangsloch ist, das sich durch den biologischen Probenträger (5) erstreckt.

10. Vorrichtung nach Anspruch 9, wobei das Dichtmittel (9, 13, 15) aus zwei Dichtelementen (13, 15) besteht, von denen ein erstes Dichtelement (13) ein Ende des Durchgangslochs abdichtet und ein zweites Dichtelement (15) das andere Ende des Durchgangslochs abdichtet.

11. Vorrichtung nach Anspruch 1, wobei die Vorrichtung (1) ein Informationsetikett (21) aufweist.

12. Vorrichtung nach Anspruch 1, ferner umfassend ein Ventil (25) in Verbindung mit einem Raum zwischen dem Abschnitt (7) und dem Dichtmittel (9, 13, 15).

13. Vorrichtung nach Anspruch 12, ferner umfassend einen Filter (19) zwischen dem Ventil und dem Raum.

14. Vorrichtung nach Anspruch 1, wobei eine Oberfläche des Wärmeübertragungssegments (11) aus einem elektrisch leitfähigen Material besteht.

15. Verfahren für die Präparation einer biologischen Probe, umfassend:
- Setzen der biologischen Probe (3) auf Abschnitt (7) in der Vorrichtung nach Anspruch 1,
- Dichten des Dichtmittels (9, 13),
- Ausführen eines Wärmeinaktivierungsschritts, um Zersetzung zu vermeiden.

## Revendications

1. Dispositif pour stocker un échantillon biologique solide (3) et pour permettre le transfert de chaleur afin de rompre les structures secondaires de l'échantillon biologique solide (3), le dispositif comprenant :
- un support (5) d'échantillon biologique ayant une partie (7) pour recevoir un échantillon biologique solide (3)
- au moins un moyen d'étanchéité (9, 13, 15) pour sceller la partie (7), l'échantillon biologique solide étant destiné à se trouver entre la partie (7) et le moyen d'étanchéité (9, 13, 15) et le moyen d'étanchéité (9, 13, 15) adoptant une forme conforme à l'échantillon biologique solide ;
- un segment (11) de transfert de chaleur qui
- s'étend au moins essentiellement à travers au moins une parmi la partie (7) et le moyen d'étanchéité (9, 13, 15),
- présente un rapport entre une conductivité thermique et une épaisseur du segment (11) de transfert de chaleur qui est supérieure à 500 W/m K afin de permettre un transfert de chaleur vers l'échantillon biologique (3) via le segment (11) de transfert de chaleur, conduisant au fait que des structures secondaires de l'échantillon biologique sont rompues par un chauffage rapide et homogène.

2. Dispositif selon la revendication 1, dans lequel l'épaisseur du segment de transfert thermique (11) est inférieure à 3,0 mm.

3. Dispositif selon la revendication 1, dans lequel un espace défini entre la partie (7) et le moyen d'étanchéité (9, 13, 15), s'il est formé sous une pression inférieure à une pression entourant le dispositif, permet une adoption d'une forme du segment de transfert thermique (11).

4. Dispositif selon la revendication 1, dans lequel au moins un parmi le moyen d'étanchéité (9, 13, 15) et le support (5) d'échantillon biologique est entièrement fait du même matériau que le segment de transfert thermique (11).

5. Dispositif selon la revendication 1, dans lequel l'épaisseur des moyens d'étanchéité (9, 13, 15) est comprise dans l'intervalle allant de 0,01 à 0,3 mm.

6. Dispositif selon la revendication 1, dans lequel le segment de transfert thermique (11) est revêtu d'au moins un parmi : l'héparine, la silice ou un matériau électriquement conducteur.

7. Dispositif selon la revendication 1, dans lequel le support (5) d'échantillon biologique présente des moyens pour être placé dans un support de dispositif.

8. Dispositif selon la revendication 1, le support (5) d'échantillon biologique présente des moyens permettant l'empilage.

9. Dispositif selon la revendication 1, dans lequel la partie (7) est un trou traversant s'étendant à travers le support (5) d'échantillon biologique.

10. Dispositif selon la revendication 9, dans lequel le moyen d'étanchéité (9, 13, 15) est constitué de deux éléments d'étanchéité (13, 15), dont un premier élément d'étanchéité (13) scelle une extrémité du trou traversant et un deuxième élément d'étanchéité (15) scelle l'autre extrémité du trou traversant.

11. Dispositif selon la revendication 1, dans lequel le dispositif (1) présente une étiquette d'information (21).

12. Dispositif selon la revendication 1, comprenant en outre une vanne (25) en liaison avec un espace situé entre la partie (7) et le moyen d'étanchéité (9, 13, 15).

13. Dispositif selon la revendication 12, comprenant en outre un filtre (19) situé entre la vanne et l'espace.

14. Dispositif selon la revendication 1, dans lequel une surface du segment (11) de transfert de chaleur est constituée d'un matériau électriquement conducteur.

15. Procédé pour préparer un échantillon biologique, comprenant :
- la mise en place de l'échantillon biologique (3) sur la partie (7) du dispositif selon la revendication 1,
- la mise des moyens d'étanchéité (9, 13) en état d'étanchéité,
- la mise en oeuvre d'une étape d'inactivation thermique pour éviter la dégradation.
